# EUROPEAN PATENT SPECIFICATION

(11) **EP 1 289 643 B1**
(45) Date of publication and mention of the grant of the patent: **19.05.2004**
(21) Application number: 01924044.9
(22) Date of filing: 28.03.2001
(51) Int. Cl.: B01J 13/02, B01J 13/14, B01J 13/18

(54) **CHEMICAL PRODUCT AND METHOD**
CHEMISCHES PRODUKT UND VERFAHREN
PRODUIT ET PROCEDE CHIMIQUE

(30) Priority: 28.04.2000 EP 00850076; 28.04.2000 US 200340 P
(43) Date of publication of application: 12.03.2003
(73) Proprietor: Akzo Nobel N.V., 6800 SB Arnhem (NL); Casco Products AB, 100 61 Stockholm (SE)
(72) Inventor: KRON, Anna, S-852 35 Sundsvall (SE); SJÖGREN, Peter, S-854 61 Sundsvall (SE); BJERKE, Odd, S-854 68 Sundsvall (SE)
(74) Representative: Jönsson, Christer
(86) International application number: PCT/SE2001/000683
(87) International publication number: WO 2001/083100

(56) References cited:
- EP-A- 0 486 080
- GB-A- 989 264
- US-A- 3 787 327

## Description

The present invention relates to expandable thermoplastic microspheres comprising a shell and a propellant entrapped therein, a method of their preparation, use of such microspheres as a foaming agent, expandable compositions comprising such microspheres, and articles comprising foamed material containing expanded microspheres.

Expandable thermoplastic microspheres comprising a thermoplastic polymer shell and a propellant entrapped therein are commercially available under the trademark Expancel ™ and are used as a foaming agent in many different applications, such as in elastomers, thermoplastic elastomers, polymers, putty, underbody coating, plastisols, printing ink, paper, explosives and cable insulations. Microspheres and their production are also described in detail in, for example, US 3615972, EP 486080 JP 87-286534, WO 99/46320 and WO 99/43758.

In such microspheres, the propellant is normally a liquid having a boiling temperature not higher than the softening temperature of the thermoplastic polymer shell. Upon heating, the propellant evaporates to increase the internal pressure at the same time as the shell softens, resulting in significant expansion of the microspheres, normally from about 2 to about 5 times their diameter. The temperature at which the expansion starts is called Tₛₜₐᵣₜ, while the temperature at which maximum expansion is reached is called Tₘₐₓ. When Tₘₐₓ is exceeded the propellant has been released through the polymer shell to such an extent that the microspheres start to collapse.

It is generally desirable to achieve as high degree of expansion of the microspheres as possible, preferably when included as a foaming agent in thermoplastics, rubber or thermoplastic elastomers. In many applications, for example when included in compositions to be worked at high temperature without risk for unintentional expansion, it is also desirable that Tₛₜₐᵣₜ is comparatively high. In many cases is it also advantageous with a high Tₘₐₓ as the start of collapse of the microspheres during expansion then occurs later.

Thus, it is an object of the present invention to provide thermally expandable microspheres with high values for Tₛₜₐᵣₜ and Tₘₐₓ, and high expansion capability at high temperatures.

It is another object of the invention to provide expandable compositions including thermally expandable microspheres, which compositions can be worked at a comparatively high temperature without unintentional expansion.

It is still another object of the invention to provide foamed materials containing expanded microspheres.

It has been found that these objects can be achieved by microspheres as defined in the appended claims.

More specifically, the invention concerns thermally expandable microspheres comprising a thermoplastic polymer shell and a propellant entrapped therein, wherein said polymer shell is made of a homo- or co-polymer from ethylenically unsaturated monomers comprising more than 85 wt%, preferably more than 92 wt%, more preferably more than 95 wt%, most preferably more than 98 wt% of nitrile containing monomers, or even substantially consisting of nitrile containing monomers, while said propellant comprises at least, suitably more than 50 wt%, preferably more than 55 wt%, more preferably more than 60 wt% most preferably more than 70 wt% of isooctane, or even substantially consists of isooctane. The term isooctane as used herein refers to 2,2,4-trimethyl pentane.

Preferably Tₛₜₐᵣₜ is within the range from 80 to 200°C, more preferably from 115 to 200°C, most preferably from 130 to 200°C, while Tₘₐₓ preferably is higher than 190°C, most preferably higher than 200°C. Normally Tₘₐₓ does not exceed 300°C. The microsphere bulk density after heating to 220°C is preferably lower than 15 g/l, most preferably lower than 12 g/l.

The nitrile containing monomers used for the polymer shell are preferably mainly selected from one or more of acrylo nitrile, methacrylo nitrile, α-chloroacrylo nitrile, α-ethoxyacrylo nitrile, fumaro nitrile, croto nitrile, most preferably acrylo nitrile, methacrylo nitrile or a mixture thereof. If other ethylenically unsaturated monomers are present, preferably in an amount from 0 to 5 wt%, most preferably from 0 to 2 wt%, they are preferably selected from one or more of acrylic esters such as methylacrylate or ethyl acrylate, methacrylic esters such as methyl methacrylate, isobornyl methacrylate or ethyl methacrylate, vinyl chloride, vinylidene chloride, vinyl pyridine, vinyl esters such as vinyl acetate, styrenes such as styrene, halogenated styrenes or α-methyl styrene, butadiene, isoprene, chloroprene. The softening temperature of the polymer shell, in most cases essentially corresponding to its glass transition temperature (T_{g}), is preferably within the range from 80 to 200°C, more preferably from 115 to 200°C most preferably from 130 to 200°C. Preferably the polymer shell constitutes from 70 to 90 wt%, most preferably from 75 to 85 wt% of the total microsphere.

It may sometimes be desirable that the monomers for the polymer shell also comprise crosslinking multifunctional monomers, such as one or more of divinyl benzene, ethylene glycol di(meth)acrylate, diethylene glycol di(meth)acrylate, triethylene glycol di(meth)acrylate, propylene glycol di(meth)acrylate, 1;4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, pentaerythritol hexa(meth)acrylate, dimethylol tricyclodecane di(meth)acrylate, triallylformal tri(meth)acrylate, allyl methacrylate, trimethylol propane tri(meth)acrylate, trimethylol propane triacrylate, tributanediol di(meth)acrylate, PEG #200 di(meth)acrylate, PEG #400 di(meth)acrylate, PEG #600 di(meth)acrylate, 3-acryloyloxyglycol monoacrylate, triacryl formal or triallyl isocyanate. If present, such crosslinking monomers preferably constitutes from 0.1 to 1 wt%, most preferably from 0.2 to 0.5 wt% of the total amounts of monomers for the polymer shell.

The propellant may, apart from isooctane, comprise up to totally 50 wt% of one or more of butanes, pentanes, hexanes, heptanes, petroleum distillates or other liquids with a suitable boiling point or boiling point range. Particularly preferred hydrocarbons for use in combination with isooctane are isobutane, isopentane, n-pentane, n-hexane, petroleum ether and n-heptane. Suitably the propellant is liquid at room temperature and has a boiling point at atmospheric pressure below the softening point of the polymer shell. Preferably the boiling point at atmospheric pressure is within the range from -20 to 150°C, most preferably from 20 to 100°C. It is particularly preferred that the propellant has a boiling point or boiling point range so a temperature above 50°C, more preferably above 60°C, most preferably above 70°C, but preferably not higher than 150°C, would be required to evaporate at least 50 wt%, preferably at least 80 wt% of the propellant at atmospheric pressure. Preferably the propellant constitutes from 10 to 30 wt%, most preferably from 15 to 25 wt% of the total microsphere.

Apart from the polymer shell and the propellant the microspheres may comprise further substances added during the production thereof, normally in an amount from 1 to 20 wt%, preferably from 2 to 10 wt%. Examples of such substances are solid suspending agents, such as one or more of silica, chalk, bentonite, starch, crosslinked polymers, methyl cellulose, gum agar, hydroxypropyl methylcellulose, carboxy methylcellulose, colloidal clays, and/or one or more salts, oxides or hydroxides of metals like Al, Ca, Mg, Ba, Fe, Zn, Ni and Mn, for example one or more of calcium phosphate, calcium carbonate, magnesium hydroxide, barium sulphate, calcium oxalate, and hydroxides of aluminium, iron, zinc, nickel or manganese. If present, these solid suspending agents are normally mainly located to the outer surface of the polymer shell. Even if a suspending agent has been added during the production of the microspheres, this may have been washed off at a later stage and could thus be substantially absent from the final product.

The average particle size of the expandable microspheres is suitably from 1 to 500 µm, preferably from about 1 to about 200 µm, most preferably from 3 to 100 µm, most preferably from about 5 to about 50 µm. By heating to a temperature above Tₛₜₐᵣₜ, it is normally possible to expand the microspheres from 2 to 7 times, preferably from 4 to 7 times, their diameter

The invention further concerns a process for producing thermally expandable microspheres as described above, comprising the steps of polymerising ethylenically unsaturated monomers in an aqueous suspension in the presence of a propellant to yield microspheres comprising a homo- or co-polymer shell entrapping said propellant, wherein said ethylenically unsaturated monomers comprises more than 85 wt%, preferably more than 92 wt%, more preferably more than 95 wt%, most preferably more than 98 wt% of nitrile containing monomers, particularly most preferably substantially consists of nitrile containing monomers, while said propellant comprises at least, suitably more than 50 wt%, preferably more than 55 wt%, more preferably more than 60 wt% most preferably more than 70 wt% of isooctane, particularly most preferably substantially consists of isooctane.

Regarding preferred monomers, propellants and other features of the final product, the above description of the novel microspheres is referred to.

In applicable parts, the polymerisation may be conducted as described in the earlier mentioned patent publications regarding microspheres.

In a suitable, preferably batchwise procedure for preparing microspheres of the invention the polymerisation is conducted in a reaction vessel as described below. For 100 parts of monomer phase (suitably including monomers and propellant), one or more polymerisation initiator, preferably in an amount from 0.1 to 5 parts, aqueous phase, preferably in an amount from 100 to 800 parts, and one or more preferably solid colloidal suspending agent, preferably in an amount from 1 to 20 parts, are mixed and homogenised. The temperature is suitably set from 40 to 90°C, preferably from 50 to 80°C, while the suitable pH depends on the suspending agent used. For example, alkaline pH, preferably from 7 to 12, most preferably from 8 to 10, is suitable if the suspending agent is selected from salts, oxides or hydroxides of metals like Al, Ca, Mg, Ba, Fe, Zn, Ni and Mn, for example one or more of calcium phosphate, calcium carbonate, chalk, magnesium hydroxide, barium sulphate, calcium oxalate, and hydroxides of aluminium, iron, zinc, nickel or manganese, each one of these agents having different optimal pH depending on solubility data. Acidic pH, preferably from 1 to 6, most preferably from 3 to 5, is suitable if the suspending agent is selected from silica, bentonite, starch, methyl cellulose, gum agar, hydroxypropyl methylcellulose, carboxy methylcellulose, colloidal clays.

In order to enhance the effect of the suspending agent, it is also possible to add small amounts of one or more promoters, for example from 0.001 to 1 wt%. Usually, such promoters are organic materials and may, for example, be selected from one or more of water-soluble sulfonated polystyrenes, alginates carboxymethylcellulose, tetramethyl ammonium hydroxide or chloride or water-soluble complex resinous amine condensation products such as the water-soluble condensation products of diethanolamine and adipic acid, the water-soluble condensation products of ethylene oxide, urea and formaldehyde, polyethylenimine, amphoteric materials such as proteinaceous, materials like gelatin, glue, casein, albumin, glutin and the like, non-ionic materials like methoxycellulose, ionic materials normally classed as emulsifiers, such as soaps, alkyl sulfates and sulfonates and the long chain quaternary ammonium compounds.

Conventional radical polymerisation may be used and initiators are suitably selected from one or more of organic peroxides such as dialkyl peroxides, diacyl peroxides, peroxy esters, peroxy dicarbonates, or azo compounds. Suitable initiators include dicetyl peroxy dicarbonate, tert-butyl cyclohexyl peroxy dicarbonate, dioctanyl peroxide, dibenzoyl peroxide, dilauroyl peroxide; didecanoyl peroxide, tert-butyl peracetate, tert-butyl perlaurate, tert-butyl perbenzoate, tert-butyl hydroperoxide, cumene hydroperoxide, cumene ethylperoxide, diisopropyl hydroxy dicarboxylate, azo-bis dimethyl valeronitrile, azo-bis isobutyronitrile, azo-bis (cyclo hexyl carbo nitrile) and the like. It is also possible to initiate the polymerisation with radiation, such as high energy ionising radiation.

When the polymerisation is complete, microspheres are normally obtained as an aqueous slurry, which can be dewatered by any conventional means, such as bed filtering, filter pressing, leaf filtering, rotary filtering, belt filtering and centifuging, and then dried by any conventional means, such as spray drying, shelf drying, tunnel drying, rotary drying, drum drying, pneumatic drying, turbo shelf drying, disc drying and fluidised bed-drying.

The invention further concerns use of thermally expandable microspheres as described above as a foaming agent, particularly in materials like plastics, rubber and paint that have to be excerpted to high temperatures for processing before they are supposed to foam, which temperatures, for example, may be above 1115°C, particularly above 130°C. The amount of micro spheres is preferably from 0.1 to 30 wt%, most preferably from 0.5 to 20 wt%. Examples of materials in which the novel microspheres advantageously are included are polyethylene, polypropylene, polystyrene, ABS (acrylonitrile butadiene styrene), which may be used for low weight high temperature processed products. Other examples include rubber for the tread surface of tyres, particularly of crude rubber and/or SBR (styrene butadiene rubber), or rubber for soles for shoes, particularly of TPU (thermoplastic uretanes), SBS (styrene butadiene styrene) and/or SEBS (styrene ethylene butadiene styrene), or paint intended to be applied by high pressure.

Moreover, the invention concerns an expandable composition comprising thermally expandable microspheres as described above as a foaming agent, preferably in an amount from 0.1 to 30 wt%, most preferably from 0.5 to 20 wt%. The composition suitably further comprise one or more polymeric substances, for example an amount from about 70 to about 99.9 wt%, most preferably from 80 to 99.5 wt%, which polymeric substances may include one or more of polyethylene, polypropylene, polystyrene, ABS, SBS, SEBS, crude rubber, SBR, TPU or similar materials.

Finally, the invention concerns articles comprising a foamed material containing expanded microspheres obtainable by heating expandable microspheres as described above, preferably when included in a composition as described above. Examples of such articles are rubber tyres, soles for shoes and low weight high temperature processed products. The expandable microspheres have suitably been heated to a temperature from 140 to 260°C, preferably from 140 to 240°C, most preferably from 150 to 230°C, resulting in an increase in volume and decrease in density of the foamed material.

The invention will now be further described in connection with the following Examples, which, however, not should be interpreted as limiting the scope thereof. If not otherwise stated, all parts and percentages refer parts and percent by weight.

Example 1: A dispersion of 7 parts of Mg(OH)₂ and 340 parts of water was prepared. A mixture of 2 parts of initiator, 60-65 parts of acrylo nitrile, 30-35 parts of methacrylo nitrile and 0.5-5.5 parts of one or two of a monofunctional, difunctional or trifunctional methacrylate monomer (given in table 1) and 21 parts of propellant (given in table 1) was added to form a reaction mixture, which then was homogenised to a suitable monomer droplet size. The initiator was one of dilauroyl peroxide (denoted in table 1) or 2,2'-azobis(isobutyronitrile) (denoted II in table 1). After homogenization, the mixture was transferred to a 300 ml bottle which was sealed and heated while agitating the mixture during polymerisation. After 15 - 20 hours at 60-65 °C the microspheres obtained were filtered, washed and dried. Expansion of the microspheres was measured in a temperature ramping experiment in a Mettler-Toledo Thermomechanical Analyser. The results are shown in Table 1. It appears that when at least 50 wt% isooctane is used as propellant both high Tₛₜₐᵣₜ and low density at high temperature (220°C) could be obtained.

**Table 1**

| Propellant | Initiator | Methacrylate monomers | Nitrile containing monomers (wt%) | Tstart (°C) | Tmax (°C) | Bulk density at 220°C (g/l) |
|---|---|---|---|---|---|---|
| 100% IP | I | TMPTMA | 99.5% | 111 | 190 | 22.0 |
| 100% IP | I | EGDMA | 99.5% | 110 | 192 | 12.7 |
| 100% IP | I | BDDM | 99.5% | 111 | 188 | 23.1 |
| 100% NP | I | TMPTMA | 99.5% | 112 | 185 | 35.0 |
| 100% NP | I | EGDMA | 99.5% | 117 | 182 | 60.7 |
| 100% NP | I | BDDM | 99.5% | 117 | 184 | 40.8 |
| 100% SBP 60/95 | I | TMPTMA | 99.5% | 128 | 197 | 16.0 |
| 100% SBP 60/95 | II | TMPTMA | 99.5% | 155 | 195 | 17.2 |
| 100% SBP 60/95 | I | EGDMA | 99.5% | 127 | 197 | 22.1 |
| 100% SBP 60/95 | I | BDDM | 99.5% | 137 | 197 | 17.8 |
| 100% NH | I | TMPTMA | 99.5% | 177 | 213 | 30.0 |
| 100% NH | I | EGDMA | 99.5% | 152 | 217 | 13.3 |
| 100% NH | I | BDDM | 99.5% | 148 | 215 | 14.3 |
| 100% NO | I | TMPTMA | 99.5% | 204 | 212 | 58.0 |
| 100% NO | I | EGDMA | 99.5% | 197 | 212 | 65.2 |
| 100% NO | I | BDDM | 99.5% | 206 | 221 | 44.8 |
| 100% IO | I | TMPTMA | 99.5% | 178 | 216 | 11.0 |
| 100% IO | II | TMPTMA | 99.5% | 179 | 203 | 10.5 |
| 100% IO | I | EGDMA | 99.5% | 145 | 218 | 10.4 |
| 100% IO | I | BDDM | 99.5% | 155 | 218 | 8.2 |
| 100% IO | I | TMPTMA, MMA | 97.5% | 148 | 217 | 14 |
| 100% IO | I | TMPTMA, MMA | 94.5% | 147 | 217 | 13 |
| 100% IO | I | BDDM, MMA | 94.5% | 158 | 219 | 11 |
| 100% IO | I | BDDM, EMA | 94.5% | 175 | 218 | 12,6 |
| 100% IO | I | TMPTMA, EMA | 94.5% | 169 | 218 | 12,8 |
| 100% IO | I | EGDMA, MMA | 94.5% | 159 | 218 | 16,3 |
| 100% IO | I | EGDMA, EMA | 94.5% | 156 | 219 | 16,5 |
| 90% IO, 10% IP | I | TMPTMA | 99.5% | 149 | 211 | 9 |
| 90% IO, 10% NP | I | TMPTMA | 99.5% | 151 | 211 | 9 |
| 83% IO, 17% SBP 60/95 | I | TMPTMA | 99.5% | 173 | 212 | 12 |
| 83% IO, 17% SBP 60/95 | I | EGDMA | 99.5% | 144 | 215 | 11 |
| 83% IO,17% SBP 60/95 | I | BDDM | 99.5% | 145 | 215 | 10 |
| 83% IO, 17% IP | I | TMPTMA | 99.5% | 140 | 203 | 10 |
| 83% IO, 17% IP | I | EGDMA | 99.5% | 134 | 204 | 10 |
| 83% IO, 17% IP | I | BDDM | 99.5% | 128 | 205 | 10 |
| 67% IO, 33% SBP 60/95 | I | TMPTMA | 99.5% | 157 | 208 | 12 |
| 67% IO, 33% SBP 60/95 | I | EGDMA | 99.5% | 138 | 212 | 13 |
| 67% IO, 33% IP | I | TMPTMA | 99.5% | 128 | 198 | 12 |
| 67% IO, 33% IP | I | EGDMA | 99.5% | 123 | 195 | 11 |
| 67% IO, 33% IP | I | BDDM | 99.5% | 124 | 199 | 10 |
| 67% IO, 33% NP | I | TMPTMA | 99.5% | 133 | 197 | 9 |
| 50% IO, 50% SBP 60/95 | I | TMPTMA | 99.5% | 153 | 205 | 14 |
| 50% IO, 50% SBP 60/95 | I | EGDMA | 99.5% | 137 | 208 | 16 |
| 50% IO, 50% SBP 60/95 | I | BDDM | 99.5% | 135 | 208 | 12 |
| 50% IO, 50% IP | I | TMPTMA | 99.5% | 118 | 191 | 15 |
| 50% IO, 50% IP | I | EGDMA | 99.5% | 117 | 192 | 12 |
| 50% IO, 50% IP | I | BDDM | 99.5% | 116 | 198 | 11 |
| 50% IO, 50% NP | I | TMPTMA | 99.5% | 131 | 194 | 11 |
| IO=isooctane; IP=isopentane; NP=n-pentane; SBP 60/95= petroleum destillate with boiling point range of 60-95°C; NH=n-heptane; NO=n-octane; MMA=methyl methacrylate; EMA=ethyl methacrylate; TMPTMA=trimetylolpropane trimethacrylate; EGDMA=ethylene glycol dimethacylate; BDDM= butane diol dimethacrylate | | | | | | |

Example 2: Microspheres prepared in Example 1 with a polymer shell made from 99.5% nitrile containing monomers and 100% isooctane as propellant were mixed into SBS thermoplastic rubber in a total amount of 2.75 wt%. The microsphere containing rubber mixture was injection moulded with a barrel temperature of 210-225°C and an injection speed of 70-150 mm/s to square-shaped plates. The density of the plates was measured, and found to be lowered from 996 g/l to 729 g/l by introducing the microspheres.

As a comparison, this experiment was repeated with microspheres with a polymer shell made from 99.5% nitrile containing monomers and 100% isopentane as propellant. The density of the plates was found to be lowered from 996 g/l to 857 g/l by introducing the microspheres. Furthermore, a discoloration of the material was found in comparison to the material containing isooctane.

## Claims

1. Thermally expandable microspheres comprising a thermoplastic polymer shell and a propellant entrapped therein, **characterised in that** said polymer shell is made of a homo- or co-polymer from ethylenically unsaturated monomers comprising more than 85 wt% nitrile containing monomers and said propellant comprises at least 50 wt% isooctane.

2. Microspheres as claimed in claim 1, wherein said ethylenically unsaturated monomers comprise more than 92 wt% nitrile containing monomers.

3. Microspheres as claimed in claim 2, wherein said ethylenically unsaturated monomers comprise more than 98 wt% nitrile containing monomers.

4. Microspheres as claimed in any one of the claims 1-3, wherein said nitrile containing monomers mainly are selected from acrylo nitrile, methacrylo nitrile or a mixture thereof.

5. Microspheres as claimed in any one of the claims 1-4, wherein the softening temperature of said polymer shell is within the range from 80 to 200°C.

6. Microspheres as claimed in any one of the claims 1-5, wherein said propellant comprises more than 60 wt% of isooctane.

7. Microspheres as claimed in claim 6, wherein said propellant comprises more than 70 wt% of isooctane.

8. Microspheres as claimed in any one of the claims 1-6, wherein said propellant comprises isooctane and one or more of isobutane, isopentane, n-pentane, n-hexane, petroleum ether and n-heptane.

9. Microspheres as claimed in any one of the claims 1-8, wherein said propellant has a boiling point or boiling point range so a temperature above 50°C would be required to evaporate at least 50 wt% of the propellant at atmospheric pressure.

10. Process for producing thermally expandable microspheres according to any one of the claims 1-9, comprising the steps of polymerising ethylenically unsaturated monomers in an aqueous suspension in the presence of a propellant to yield microspheres comprising a hollow homo- or co-polymer shell entrapping said propellant, **characterised in that** said ethylenically unsaturated monomers comprises more than 85 wt% of nitrile containing monomers and said propellant comprises more than 50 wt% of isooctane.

11. Use of thermally expandable microspheres according to any one of the claims 1-9 as a foaming agent.

12. Expandable composition comprising one or more polymeric substances and thermally expandable microspheres according to any one of the claims 1-9 as a foaming agent.

13. An article comprising foamed material containing expanded microspheres obtainable by heating expandable microspheres according to any one of the claims 1-9.

## Patentansprüche

1. Thermisch expandierbare Mikrokügelchen, umfassend eine Hülle aus einem thermoplastischen Polymer und ein darin eingeschlossenes Treibmittel, **dadurch gekennzeichnet, dass** die Polymerhülle aus einem Homo- oder Copolymer aus ethylenisch ungesättigten Monomeren, die mehr als 85 Gew.-% Nitril enthaltende Monomere umfassen, hergestellt ist und das Treibmittel mindestens 50 Gew.-% Isooctan umfasst.

2. Mikrokügelchen gemäß Anspruch 1, wobei die ethylenisch ungesättigten Monomeren mehr als 92 Gew.-% Nitril enthaltende Monomere umfassen.

3. Mikrokügelchen gemäß Anspruch 2, wobei die ethylenisch ungesättigten Monomeren mehr als 98 Gew.-% Nitril enthaltende Monomere umfassen.

4. Mikrokügelchen gemäß einem der Ansprüche 1 bis 3, wobei die Nitril enthaltenden Monomeren hauptsächlich aus Acrylnitril, Methacrylnitril oder einem Gemisch davon ausgewählt sind.

5. Mikrokügelchen gemäß einem der Ansprüche 1 bis 4, wobei die Erweichungstemperatur der Polymerhülle im Bereich von 80 bis 200 °C liegt.

6. Mikrokügelchen gemäß einem der Ansprüche 1 bis 5, wobei das Treibmittel mehr als 60 Gew.-% Isooctan umfasst.

7. Mikrokügelchen gemäß Anspruch 6, wobei das Treibmittel mehr als 70 Gew.-% Isooctan umfasst.

8. Mikrokügelchen gemäß einem der Ansprüche 1 bis 6, wobei das Treibmittel Isooctan und einen oder mehrere Bestandteile aus Isobutan, Isopentan, n-Pentan, n-Hexan, Petrolether und n-Heptan umfasst.

9. Mikrokügelchen gemäß einem der Ansprüche 1 bis 8, wobei das Treibmittel einen derartigen Siedepunkt oder Siedebereich aufweist, dass eine Temperatur von mehr als 50 °C notwendig wäre, um mindestens 50 Gew.-% des Treibmittels bei Atmosphärendruck zu verdampfen.

10. Verfahren zur Herstellung von thermisch expandierbaren Mikrokügelchen nach einem der Ansprüche 1 bis 9, umfassend die Schritte Polymerisieren eines ethylenisch ungesättigten Monomers in einer wässrigen Suspension in Gegenwart eines Treibmittels, um Mikrokügelchen zu erhalten, die eine hohle Hülle, die das Treibmittel einschließt, aus einem Homo- oder Copolymer umfassen, **dadurch gekennzeichnet, dass** die ethylenisch ungesättigten Monomeren mehr als 85 Gew.-% Nitril enthaltende Monomere umfassen und das Treibmittel mehr als 50 Gew.-% Isooctan umfasst.

11. Verwendung von thermisch expandierbaren Mikrokügelchen nach einem der Ansprüche 1 bis 9 als Schaumbildner.

12. Expandierbare Zusammensetzung, umfassend eine oder mehrere polymere Substanzen und thermisch expandierbare Mikrokügelchen nach einem der Ansprüche 1 bis 9 als Schaumbildner.

13. Gegenstand, umfassend geschäumtes Material, welches expandierte Mikrokügelchen, die durch Erwärmen der expandierbaren Mikrokügelchen nach einem der Ansprüche 1 bis 9 erhältlich sind, enthält.

## Revendications

1. Microsphères dilatables sous l'effet de la chaleur, comprenant une enveloppe de polymère thermoplastique et un agent propulseur enfermé dedans, **caractérisées en ce que** ladite enveloppe de polymère est constituée d'un homopolymère ou copolymère de monomères éthyléniquement insaturés comprenant plus de 85 % en poids de monomères du type nitrile, et ledit agent propulseur comprend au moins 50 % en poids d'isooctane.

2. Microsphères selon la revendication 1, pour lesquelles lesdits monomères éthyléniquement insaturés comprennent plus de 92 % en poids de monomères du type nitrile.

3. Microsphères selon la revendication 2, pour lesquelles lesdits monomères éthyléniquement insaturés comprennent plus de 98 % en poids de monomères du type nitrile.

4. Microsphères selon l'une quelconque des revendications 1 à 3, pour lesquelles lesdits monomères du type nitrile sont choisis principalement parmi l'acrylonitrile, le méthacrylonitrile et leurs mélanges.

5. Microsphères selon l'une quelconque des revendications 1 à 4, pour lesquelles la température de ramollissement de ladite enveloppe de polymère est comprise dans l'intervalle allant de 80 à 200 °C.

6. Microsphères selon l'une quelconque des revendications 1 à 5, dont ledit agent propulseur contient plus de 60 % en poids d'isooctane.

7. Microsphères selon la revendication 6, dont ledit agent propulseur contient plus de 70 % en poids d'isooctane.

8. Microsphères selon l'une quelconque des revendications 1 à 6, dont ledit agent propulseur contient de l'isooctane et un ou plusieurs constituants pris parmi l'isobutane, l'isopentane, le n-pentane, le n-hexane, l'éther de pétrole et le n-heptane.

9. Microsphères selon l'une quelconque des revendications 1 à 8, dont ledit agent propulseur a un point d'ébullition ou un intervalle de points d'ébullition tel qu'une température supérieure à 50 °C serait nécessaire pour évaporer au moins 50 % en poids de l'agent propulseur à la pression atmosphérique.

10. Procédé de production de microsphères dilatables sous l'effet de la chaleur, selon l'une quelconque des revendications 1 à 9, qui comprend les étapes de polymérisation de monomères éthyléniquement insaturés en suspension aqueuse, en présence d'un agent propulseur, de manière à obtenir des microsphères comprenant une enveloppe creuse d'homopolymère ou de copolymère, enfermant ledit agent propulseur, procédé **caractérisé en ce que** lesdits monomères éthyléniquement insaturés comprennent plus de 85 % en poids de monomères du type nitrile et ledit agent propulseur comprend plus de 50 % en poids d'isooctane.

11. Utilisation de microsphères dilatables sous l'effet de la chaleur selon l'une quelconque des revendications 1 à 9, en tant qu'agent pour la formation de mousse.

12. Composition expensible qui comprend une ou plusieurs matières polymères et des microsphères dilatables sous l'effet de la chaleur selon l'une quelconque des revendications 1 à 9, en tant qu'agent pour la formation de mousse.

13. Article comprenant un matériau sous forme de mousse, contenant des microsphères dilatées que l'on peut obtenir en chauffant des microsphères dilatables selon l'une quelconque des revendications 1 à 9.
